# NEUE EUROPÄISCHE PATENTSCHRIFT

(11) **EP 2 364 848 B2**
(45) Veröffentlichungstag und Bekanntmachung des Hinweises auf die Entscheidung über den Einspruch: **08.02.2023**
(45) Hinweis auf die Patenterteilung: 28.08.2013
(21) Anmeldenummer: 11154845.9
(22) Anmeldetag: 17.02.2011
(51) Int. Cl.: B32B 27/32, B65D 75/58

(54) **Folie, insbesondere für Aufreißverpackungen und Verfahren zur Herstellung einer Beutelverpackung unter Verwendung der Folie**
Film, particularly for peel-open packaging and method for manufacturing a bag packaging using the same
Film, notamment pour emballages déchirables et procédé de fabrication d'un emballage de sac en utilisation ce film

(30) Priorität: 19.02.2010 DE 102010008706
(43) Veröffentlichungstag der Anmeldung: 14.09.2011
(73) Patentinhaber: Mondi AG, 1030 Wien (AT)
(72) Erfinder: Perick, Mathias, 48683 Ahaus-Altstätte (DE); Niepelt, Ralf, 48599 Gronau (DE); Kohla, Michael, 48329 Havixbeck (DE)
(74) Vertreter: Lorenz, Bernd Ingo Thaddeus

(56) Entgegenhaltungen:
- EP-A1- 2 067 717
- EP-A1- 2 067 717
- EP-A2- 0 875 369
- WO-A1-02/068192
- DE-A1- 10 003 423
- DE-A1- 19 630 478
- DE-A1- 19 905 415
- DE-A1- 19 941 427

## Beschreibung

Die Erfindung betrifft eine Folie für Aufreißverpackungen, wobei die Folie aus mehreren Schichten besteht und mit einer Schwächungslinie versehen ist.

Eine optimale Verpackung muss eine Vielzahl von Anforderungen erfüllen. Für die Produktakzeptanz spielt das Öffnungsverhalten eine wesentliche Rolle. Daher werden Verpackungen häufig mit leicht zu öffnenden Verschlüssen versehen. Dies ermöglicht dem Kunden eine leichtere Handhabung beim Öffnen, ohne dass er zusätzliche Hilfsmittel, wie beispielsweise eine Schere, benötigt.

Folienverpackungen finden in der Praxis immer breitere Anwendungsbereiche, da sie luft- und feuchtigkeitsdicht sind und zudem nur ein geringes Eigengewicht aufweisen. Zudem sind sie der Form des Verpackungsgutes optimal anpassbar. Für Folienverpackungen werden häufig Polyolefinfolien und Verbundfolien mit polyolefinischen Schichten eingesetzt. Polyolefine sind siegelfähig und weisen gute mechanische Festigkeitseigenschaften bei einem geringen spezifischen Gewicht auf. Sie bewahren zudem den Feuchtigkeitsgehalt und die Aromen des Packgutes.

Um eine erleichterte Öffnungsmöglichkeit zu ermöglichen, wird das Folienmaterial in begrenzten Bereichen geschwächt. Bei Polyolefinfolien geschieht dies beispielsweise durch Anstanzen, welches das Material nicht vollständig durchdringt. Beim Anstanzen ist eine präzise Steuerung der Eindringtiefe erforderlich, die nur über kostspielige Präzisionsstanzen erzielt werden kann. Dabei ist für jede neue Stanzlinie eine neue Stanzform erforderlich. Dies führt zu erheblichen Kosten für die eingesetzten Bearbeitungsmaschinen. Eine weitere Möglichkeit, um eine gezielte Schwächung bei Polyolefinfolien vorzunehmen, besteht in der Perforation. Beim Perforieren werden kleine Löcher in das Verpackungsmaterial eingebracht. Nachteil der Perforation ist, dass die Dichtheit der Verpackung nach dem Perforieren nicht mehr gewährleistet ist.

Bei Folien, die nicht aus Polyolefinen bestehen, gibt es die Möglichkeit, eine Schwächung durch den Einsatz von Lasern vorzunehmen. Dieses Verfahren wird beispielsweise bei Verpackungen eingesetzt, die Schichten aus Polyethylenterephthalat (PET) enthalten. Das PET lässt sich mit CO₂-Lasern hervorragend schneiden. Dabei kann eine Schwächungslinie durch Reduzierung der Schichtdicke oder durch Versprödung des Materials erzeugt werden. Der Einsatz von Lasern ermöglicht eine sehr flexible Bearbeitung des Verpackungsmaterials, da geometrische Formen schnell und einfach herstellbar sind.

Bei Einsatz von CO₂-Lasern ist die Bearbeitung von Polyolefinen jedoch nicht ohne weiteres möglich. Dies liegt daran, dass viele Polyolefine die Strahlung des CO₂-Lasers nur sehr schwach absorbieren und somit der gewünschte Schneideffekt ausbleibt. Daher wird das Laserschneiden in der Regel nur bei Verbundfolien angewendet, die eine Schicht aus einem Polyester aufweisen, z. B. Verbundfolie aus PET/PE. Allerdings treten bei einem PET/PE-Verbund Schwierigkeiten auf, wenn die Kaschierhaftung der Polyethylenfolie (PE) an der Polyester (PET)-Folie gering ist oder die Zähigkeit der Polyethylenfolie zu hoch ist. In diesen Fällen verschlechtert sich das Aufreißverhalten. Dies stellt vor allem bei größeren Gebinden ein Problem dar, da diese hohe Folienfestigkeiten erfordern.

Im Stand der Technik finden sich zahlreiche Verfahren zur Herstellung einer Schwächungslinie bei Aufreißverpackungen, die zur Erleichterung des Einreißens beim Öffnen dienen.

So wird beispielsweise in der EP 1 849 579 A1 ein Verfahren zur Herstellung einer Folie für Aufreißverpackungen beschrieben. Dabei wird eine Folienbahn mit zumindest einer Folienschicht aus einem thermoplastischen Kunststoff einer Heißprägevorrichtung zugeführt. In der Heißprägevorrichtung wird die Folienbahn mit einer linienförmigen Prägung versehen. Dann wird die Folienbahn einer Laserstrahlvorrichtung zugeführt, in der sie mit einer linienförmigen Lasernaht versehen wird. Dabei sind die Lasernaht und die Prägung in Deckung zueinander und bilden die Schwächungslinie.

Die DE 103 20 429 B3 beschreibt eine Verbundfolie für Aufreißverpackungen. Die Verpackung umfasst eine Innenfolie aus einem zähen Kunststoff und eine auf die Innenfolie aufkaschierte Außenfolie. Die Außenfolie besitzt im Vergleich zur Innenfolie eine geringere Zähigkeit. Als Aufreißhilfe zum Öffnen der Verpackung weist die Innenfolie kerbförmig eingeformte Schwächungslinien auf.

Die US 3 790 744 beschreibt ein Verfahren, zur Erzeugung einer Schwächungslinie in einem Laminat. Das Laminat umfasst mehrere Schichten. Die Schwächungslinie wird in mindestens einer der Schichten erzeugt. Dazu wird die Wellenlänge der Strahlungsenergie so gewählt, dass der Strahl von dieser Schicht absorbiert wird und diese verdampft. Dieses Verfahren ist nur bei Polymeren anwendbar, die ein ausreichendes Absorptionsvermögen für Strahlung der jeweiligen Wellenlänge besitzen.

In der DE 199 41 427 A1 wird eine Verpackung aus einer Folie beschrieben, die aus einem thermoplastischen Kunststoff besteht. Die Folie ist mit einer Rille versehen, die mittels eines Laserstrahls erzeugt wird. Beim Öffnen der Folie wird die Verpackung in der Rille aufgerissen. Je tiefer die gewünschte Rille sein soll, desto stärker wird die Leistung des Lasers gewählt. Bei diesem Verfahren ist eine hochpräzise und komplizierte Abstimmung der Leistung des Lasers und der Bahngeschwindigkeit der Folien notwendig. Je schneller die Folienbahn bei der Ausdünnung läuft, desto höher müssen die Laserleistungen für vergleichbare Rillentiefen und Rillenbreiten sein. Dieses Verfahren ist stark Fehler behaftet, da eine zu große Leistung des Lasers bzw. eine zu geringe Bahngeschwindigkeit zu einer vollständigen Abtragung und somit zu einer Durchtrennung führen.

Aus EP 2 067 717 A1 ist eine wiederverschließbare Verpackung bekannt, die aus einer zu einem Tray geformten mehrschichtigen Folie und einer aufgesiegelten Deckelfolie besteht. Die zu einem Tray umgeformte Mehrschichtfolie weist eine Trägerschicht, eine Klebstoffschicht aus einem Haftklebstoff sowie an der Verpackungsinnenseite eine Siegelschicht aus einem siegelfähigen Polymer auf. Die Siegelfestigkeit zwischen den versiegelten Schichten der Deckelfolie und der zu einem Tray umgeformten Mehrschichtfolie ist größer als die Verbundhaftung aus der Siegelschicht, der Haftklebstoffschicht und der Trägerschicht bestehenden Schichtenanordnung des Trays. Dadurch trennen sich die versiegelten Schichten zusammen mit zumindest einer Teilschicht der Haftklebstoffschicht im Bereich der Siegelnaht von der Trägerschicht beim ersten Öffnen der Verpackung ab und kann zum Wiederverschließen im Siegelnahtbereich das dadurch freigelegte selbstklebende Teilstück der Haftklebstoffschicht verwendet werden. Damit die Verpackung sich mit möglichst geringem Kraftaufwand leicht und exakt öffnen lässt, enthält die Siegelschicht an der Verpackungsinnenseite der zu einem Tray umgeformten Mehrschichtfolie laserabsorptive Substanzen und ist mit einer durch Laserstrahleinwirkung erzeugten Schwächung ausgestattet. Die Schwächung erstreckt sich im Wesentlichen parallel zu der Siegelnaht, welche die Deckelfolie mit dem Tray verbindet.

Vor diesem Hintergrund liegt der Erfindung die Aufgabe zugrunde, eine Folie anzugeben, welche die mechanischen Eigenschaften einer Polyolefinfolie aufweist und sich entlang einer Schwächungslinie leicht und mit definierter Rissausbreitung einreißen lässt, wobei die Schwächungslinie dicht sein soll.

Gegenstand der Erfindung und Lösung dieser Aufgabe ist eine mehrschichtige Folie nach Anspruch 1.

Die Erfindung ermöglicht das Einbringen einer Schwächungslinie in eine Polyolefinschicht mit einem CO₂-Laser. Dazu wird eine Substanz in die Polyolefinschicht eingebettet, die ein besonders ausgeprägtes Absorptionsvermögen für die Strahlung des CO₂-Lasers hat. Der Absorptionsgrad dieser Substanz liegt um ein Vielfaches über dem Absorptionsgrad der Polyolefine. Als laserabsorptive Substanz sind Stoffe geeignet, die Strahlung in einem Wellenlängenbereich von 9,3 bis 11,5 µm, vorzugsweise 10,6 µm absorbieren und diese in Wärmeenergie umwandeln. Durch den Einsatz solcher Zusätze können gezielt Schichten in Mehrschichtfolien gelasert werden. Vorzugsweise sind wenigstens zwei Polyolefinschichten direkt benachbart zueinander angeordnet, von denen eine Polyolefinschicht eine laserabsorptive Substanz enthält, während die andere Polyolefinschicht diese Substanz nicht enthält. In der Polyolefinschicht mit der laserabsorptiven Substanz wird eine Schwächungslinie erzeugt. Die Schwächungslinie ist in der einen Polyolefinschicht gewährleistet, so dass eine aus der Folie bestehende Verpackung leicht zu öffnen ist. Die andere Polyolefinschicht sorgt dafür, dass die Verpackung im ungeöffneten Zustand dicht ist.

Die erfindungsgemäße Lehre ist nicht auf Verpackungsfolien beschränkt, sondern kann überall dort zur Anwendung kommen, wo Schwächungslinien in Polyethylenfolien benötigt werden, z. B. bei Etikettenfolien und Deckelfolien für Schalen und Becher. Die erfindungsgemäße Folie kann ferner zu Verbundfolien weiterverarbeitet werden, z. B. Verbundfolien aus PET/PE, PET/PET metallisiert/PE, OPA/PE, BOPP/PE, PE/PE, CPP/PE, PET/Alu/PP, BOPP/PE und dergleichen.

Die Polyolefinschicht, welche lasersensitive Substanzen enthält, kann zwischen zwei Polyolefinschichten ohne laserabsorptive Substanz eingebettet sein. Die Strahlung des Lasers wird nur von der mittleren Polyolefinschicht absorbiert. Die beiden äußeren Polyolefinschichten zeigen keine, bzw. nur schwache Wechselwirkungen mit der Laserstrahlung. Dadurch entsteht nur in der Kernschicht eine Schwächungslinie. Die einhüllenden Schichten bleiben unversehrt.

Es besteht auch die Möglichkeit, dass die Schicht mit der laserabsorptiven Substanz an einer Außenseite der Verpackung liegt. Schließen sich an diese äußere Schicht weitere Polyolefinschichten ohne diese Substanz an, so hat der Laser nur auf die äußere Schicht einen Einfluss. Die weiteren Schichten absorbieren die Strahlung nicht.

Eine weitere Ausführungsform der Erfindung besteht darin, dass die mittlere und eine äußere Polyolefinschicht laserabsorptive Substanzen enthalten und sich daran eine reine Polyolefinschicht anschließt. In diesem Fall werden zwei Schichten gelasert, während die dritte unversehrt bleibt.

Erfindungsgemäß bestehen die Polyolefinschichten aus Polyethylen Polyethylen besitzt nur ein schwaches Absorptionsvermögen für die Laserstrahlung eines CO₂-Lasers. Erst durch den erfindungsgemäßen Zusatz einer laserabsorptiven Substanz kann in einer Polyethylenschicht eine Schwächungslinie erzeugt werden. Benachbarte Polyethylenschichten ohne derartige Substanzen zeigen vernachlässigbare Wechselwirkungen mit der Laserstrahlung. Dadurch liegt entlang der Schwächungslinie eine Verringerung der Reißfestigkeit vor, ohne dass die Folie auch nur abschnittsweise vollständig durchtrennt ist. Durch eine solche Ausgestaltung kann ein Austausch von Gas, Dampf und Flüssigkeit durch die Schwächungslinie hindurch vermieden werden.

Als laserabsorptive Substanz erweisen sich insbesondere Mischsilikate als besonders vorteilhaft. Beispielsweise können Lepidolith (Al-K-Li-F-Silikat), Porphyr (Al-K-Fe-Silikat) oder Phonolith (Al-K-Na-Ca-Fe-Silikat) eingesetzt werden. Als besonders günstiger Zusatz zur Absorption von Laserstrahlung hat sich Kaolinit erwiesen. Dabei handelt es sich um ein Mineral aus der Klasse der Schichtsilikate.Kaolinit hat die chemische Zusammensetzung: Al₄[(OH)₈|Si₄O₁₀]. Es ist Hauptbestandteil des Gesteins Kaolin.

Weitere Substanzen, die als laserabsorptive Substanz in Betracht kommen sind folgende anorganische Substanzen: Glimmer, Serizit, Chrysotil-Asbest, Talkum (Mg-Silikat), Kieselgel (SiO₂), Anorganische Pigmente, wie z.B. Zinkphosphat (Zn₃(PO₄)₂ x 4 H₂O) oder Calciumchromat (CaCrO₄).

Auch polymere Stoffe können als Zusätze zur Verbesserung des Absorptionsvermögens eingesetzt werden. Es kommen beispielsweise hochmolekulares Polyethylenglykol, Polysaccharide, Polydimethylsiloxan, Polyacetale, wie Polyoxymethylen, Polycarbonat oder Polyethylenterephthalat (PET) in Frage.

Die laserabsorptive Substanz wird vorzugsweise in einer Menge von mehr als 0,1 Gew.-% und weniger als 50 Gew.-%, vorzugsweise zwischen 0,2 Gew.-% und 10 Gew.- bezogen auf die Gesamtmasse der die Substanz enthaltenen Polyolefinschicht eingesetzt.

Die Dicke der zumindest einen mit der laserabsorptiven Substanz versehenen Schicht als auch die Dicke der zumindest einen Polyolefinschicht, die frei von dieser Substanz ist, liegen zwischen 5 µm und 200 µm, bevorzugt zwischen 10 µm und 100 µm.

Im Rahmen der Erfindung kann insbesondere eine mehrschichtige Polyolefinfolie verwendet werden, die eine Kernschicht aus Polyolefin und einer laserabsorptiven Substanz sowie polyolefinischen Außenschichten ohne laserabsorptive Substanz aufweist. Aus einer solchen Folie können beispielsweise Beutelverpackungen für Hygieneprodukte, z. B. Babywindeln, gefertigt werden, die einerseits die Vorteile einer polyolefinischen Folie nutzen und sich leicht mit einer kontrollierten Rissausbreitung durch Aufreißen öffnen lassen.

Die beschriebenen Polyolefinfolien können ferner zu Verbundfolien weiterverarbeitet werden, die beispielsweise als hochwertige Verpackungsmaterialien für Nahrungsmittel, Tierfutter und dergleichen eignen. Im Rahmen des erfindungsgemäßen Verfahrens kann daher auch ein Folienlaminat, bestehend aus einer mehrschichtigen Polyolefinfolie einer Beutelinnenseite und einer bedruckbaren Außenfolie, die mittels eines CO₂-Laserstrahls trennbar ist, verwendet werden. Die Polyolefinfolien des Folienlaminats weist eine polyolefinische Schicht ohne Zusatz einer laserabsorptiven Substanz an der Beutelinnenseite und eine Kernschicht sowie eine an die Außenfolie angrenzende Kaschierschicht jeweils mit einem Zusatz aus einer laserabsorptiven Substanz auf. Erfindungsgemäß wird die Schwächungslinie mittels eines CO₂-Laserstrahls erzeugt, welcher die Außenfolie und die Kaschierschicht sowie die Kernschicht der Polyolefinfolie schwächt und die reine Polyolefinschicht an der Beutelinnenseite unversehrt lässt. Die Außenfolie des Laminats kann insbesondere aus einem Polyester, einem Polyester/Metallfolienverbund oder bi-axial orientiertem Polypropylen bestehen.

Als laserabsorptive Substanz werden vorzugsweise Mischsilikate verwendet. Die Substanz wird bei der Folienherstellung zweckmäßig als Batch - bestehend auch einem Trägerpolymer und der laseraktivierbaren Wirksubstanz - verarbeitet. Batch und Polymere zur Fertigung der Folie werden so aufeinander abgestimmt, dass die laserabsorptive Substanz in einer Menge von mehr als 1 Gew.-% und weniger als 50 Gew.-%, vorzugsweise zwischen 0,2 Gew.% und 10 Gew.-% bezogen auf die Gesamtmasse der die laserabsorptive Substanz enthaltenen Schicht eingearbeitet wird.

Weitere Merkmale und Vorteile der Erfindung ergeben sich aus der nachfolgenden Beschreibung von Ausführungsbeispielen und den dazu gehörenden Figuren. Es zeigen schematisch:
- **Fig. 1**: eine Folie für eine Beutelverpackung, z. B. für Babywindeln,
- **Fig. 2**: eine Kaschierfolie für Seitenfaltenbeutel, z. B. für Nahrungsmittel, Tierfutter und sonstige schüttfähige Verpackungsgüter und
- **Fig. 3**: eine verstärkte Folie zur Bildung eines Kaschierverbundes.

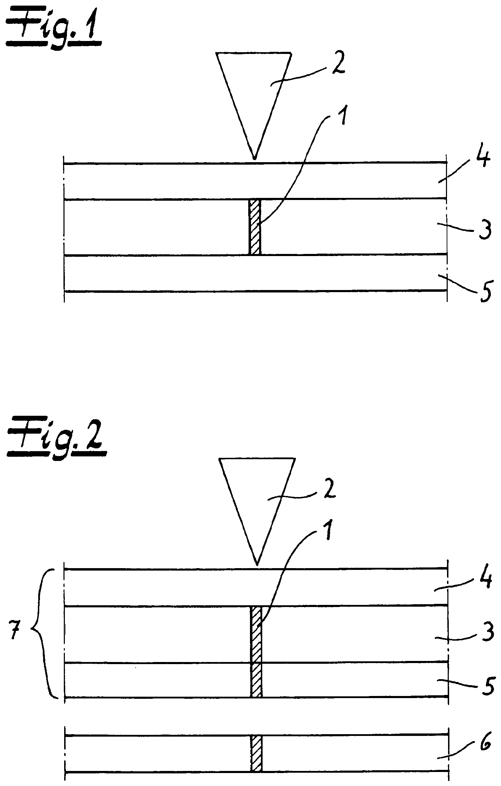

In Fig. 1 ist eine mehrschichtige Polyolefinfolie dargestellt. Die Folie weist eine Schwächungslinie 1 auf, die mit einem CO₂-Laserstrahl 2 in einer mittleren Polyolefinschicht 3 erzeugt wurde.

Bei der oberen Schicht 4 handelt es sich um eine Siegelschicht mit einer Stärke von z. B. 20 µm. Die Schicht 4 setzt sich aus 60 Gew.-% LLDPE und 40 Gew.-% LDPE zusammen.

An die obere Schicht 4 schließt sich die mittlere Schicht 3 an. Die Stärke dieser Schicht 3 beträgt z. B. 30 µm. Die Schicht 3 enthält 60 Gew.-% LLDPE, 35 Gew.-% LDPE sowie eine laserabsorptive Substanz, insbesondere aus Kaolin.

Bei der unteren Schicht 5, die sich an die mittlere Schicht 3 anschließt, handelt es sich um eine bedruckbare Polyolefinschicht mit einer Stärke von 20 µm. Diese setzt sich aus 60 Gew.-% LLDPE und 40 Gew.-% LDPE zusammen.

Im Ausfuhrungsbeispiel 1 enthält somit nur die mittlere Schicht 3 Substanzen, welche Laserstrahlung absorbieren. Sie wird von zwei Schichten 4, 5, der Siegelschicht und einer bedruckbaren Außenschicht eingeschlossen, welche kein Absorptionsvermögen für die Strahlung aufweisen. Dadurch kann gezielt eine Schwächungslinie 1 nur in die mittlere Schicht 3 der Folie eingebracht werden, wobei die obere Schicht 4 und die untere Schicht 5 unversehrt bleiben.

In Fig. 2 ist eine Verbundfolie für Seitenfaltenbeutel dargestellt, die aus einer mehrschichtigen Polyolefinfolie 7 sowie eine bedruckte Außenfolie 6 aus einem steiferen Polymer, welches mittels eines CO₂-Laserstrahls trennbar ist, zusammensetzt.

Die polyolefinische Folie 7 besteht aus drei Schichten 3, 4, 5. Bei der oberen Schicht 4 handelt es sich um eine Siegelschicht mit einer Stärke von 20 µm. Die Schicht 4 besteht aus 70 Gew.-% LLDPE und 30 Gew.-% LDPE. Die mittlere Schicht 3, mit einer Stärke von 30 µm, enthält 70 Gew.-% LLDPE, 25 Gew.-% LDPE und eine laserstrahlabsorptive Substanz. Als laserstrahlabsorptive Substanz wird Kaolin verwendet, welches bei der Folienherstellung als Batch, bestehend aus einem Trägerpolymer und der Wirksubstanz verarbeitet wird. Bei der unteren Schicht 5 handelt es sich um eine Kaschierschicht, die eine Stärke von 20 µm aufweist und die gleiche Zusammensetzung besitzt wie die mittlere Schicht 3.

Die Folie 7 wird mit der unteren Schicht 5 gegen eine bedrucke Außenfolie 6 kaschiert. Bei der Außenfolie 6 handelt es sich um eine PET-Folie mit einer Stärke von 12 µm.

Durch einen Laserstrahl 2 wird eine Schwächungslinie 1 erzeugt, welche die Außenfolie 6 und die Kaschierschicht 5 sowie die Kernschicht 3 der Polyolefinfolie 7 schwächt und die reine Polyolefinschicht 4 an der Beutelinnenseite unversehrt lässt. Entlang der Schwächungslinie 1 kann die Verbundfolie leicht eingerissen werden, wobei der Riss sich kontrolliert entlang der Schwächungslinie 1 ausbreitet. Da die Siegelschicht 4 unversehrt bleibt, ist die Schwächungslinie 1 auch dicht. Die Verbundfolie eignet sich daher zur Herstellung von hochwertigen Verpackungen.

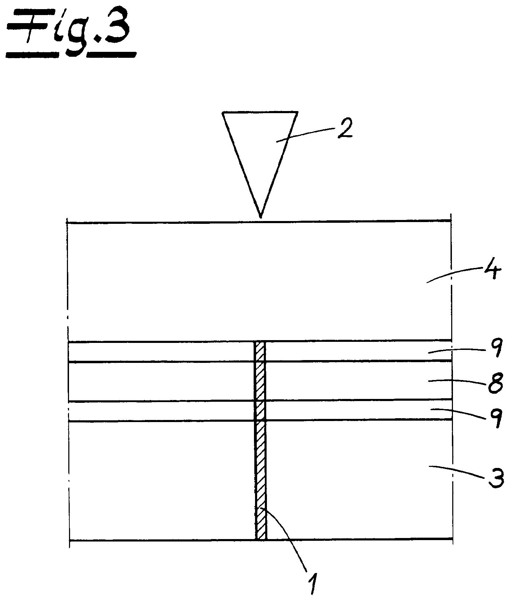

Fig. 3 zeigt eine Folie, die zur Kaschierung gegen eine PET- oder orientierte PP-Folie vorgesehen ist, um eine Beutel- oder Deckelfolie zu bilden. Die Folie weist eine untere Polyolefinschicht 3 mit einer Dicke von 30 µm auf, die aus PE besteht und eine laserabsorptive Substanz enthält. An der gegenüberliegenden Seite ist als Siegelschicht eine weitere 30 µm dicke Polyolefinschicht 4 aus PE vorgesehen, die frei von laserabsorptiven Substanzen ist. Um die Steifigkeit zu erhöhen ist zwischen den Polyolefinschichten 3, 4 eine Kernschicht 8 aus Polyamid (PA) angeordnet. Die Kernschicht 8 weist eine Dicke von 10 µm auf und schließt über Haftvermittlerschichten 9 mit jeweils einer Dicke von 5 µm an die Polyolefinschichten 3, 4 an. Die Haftvermittlerschichten 9, die Kernschicht 8 sowie die mit der laserabsorptiven Substanz versehene Polyolefinschicht 3 können die Strahlung eines CO₂-Lasers in einem gewissen Maße absorbieren. Durch den Laserstrahl 2 eines CO₂-Lasers kann deshalb eine Schwächungslinie 1 erzeugt werden, welche die Kernschicht 8, die Haftvermittlerschichten 9 sowie die mit der laserabsorptiven Substanz versehene Plyolefinschicht 3 schwächt. Die reine Polyolefinschicht 4 bleibt dagegen unversehrt, so dass die gesamte Folie geschlossen bleibt.

## Patentansprüche

1. Mehrschichtige Folie für Aufreißverpackungen mit zumindest zwei Polyolefinschichten (3, 4, 5),
wobei zumindest eine Polyolefinschicht (3) eine laserabsorptive Substanz enthält,
wobei in die Polyolefinschicht (3) mit der laserabsorptiven Substanz eine Schwächungslinie (1) mittels eines CO₂-Laserstrahls (2) eingebracht ist und
wobei mindestens eine weitere Polyolefinschicht (4) die laserabsorptive Substanz nicht enthält und eine unversehrte Siegelschicht an der Verpackungsinnenseite bildet,
wobei die Polyolefinschichten (3, 4, 5) aus Polyethylen bestehen.

2. Folie nach Anspruch 1, **dadurch gekennzeichnet, dass** die Polyolefinschicht (3) mit der laserabsorptiven Substanz und die weitere Polyolefinschicht (4), welche diese Substanz nicht enthält, direkt benachbart zueinander angeordnet sind.

3. Folie nach Anspruch 1 oder 2, **dadurch gekennzeichnet, dass** die Polyolefinschicht (3) mit der laserabsorptiven Substanz zwischen Polyolefinschichten (4, 5) ohne diese Substanz eingebettet ist.

4. Folie nach einem der Ansprüche 1 bis 3, **dadurch gekennzeichnet, dass** die laserabsorptive Polyolefinschicht (3) Mischsilikate als laserabsorptive Substanz enthält.

5. Folie nach Anspruch 4, **dadurch gekennzeichnet, dass** die laserabsorptive Polyolefinschicht (3) Kaolin als laserabsorptive Substanz enthält.

6. Folie nach einem der Ansprüche 1 bis 5, **dadurch gekennzeichnet, dass** die laserabsorptive Polyolefinschicht (3) mehr als 0,1 Gew.-% und weniger als 50 Gew.-%, vorzugsweise zwischen 0,2 Gew.-% und 10 Gew.-% der laserabsorptiven Substanz enthält.

7. Folie nach einem der Ansprüche 1 bis 6, **dadurch gekennzeichnet, dass** die Polyolefinschicht (3) mit der laserabsorptiven Substanz eine Dicke zwischen 5 und 200 µm, vorzugsweise 10 und 100 µm aufweist.

8. Folie nach einem der Ansprüche 1 bis 7, **dadurch gekennzeichnet, dass** die weitere Polyolefinschicht (4), welche die Substanz nicht enthält, eine Dicke zwischen 5 und 200 µm, vorzugsweise 10 und 100 µm aufweist.

## Claims

1. A multi-layer film for tear-open packs with at least two polyolefin layers (3, 4, 5),
wherein at least one polyolefin layer (3) contains a laser-absorbent substance,
wherein a tear line (1) is inserted into the polyolefin layer (3) with the laser-absorbent substance by means of a CO₂-laser beam (2) and
wherein at least one further polyolefin layer (4) does not contain the laser-absorbent substance and forms an intact sealing layer on the inside of the pack,
wherein the polyolefin layers (3, 4, 5) consist of polyethylene.

2. The film according to claim 1, **characterised in that** the polyolefin layer (3) with the laser-absorbent substance and the further polyolefin layer (4), which does not contain this substance, are arranged directly adjacent to each other.

3. The film according to claim 1 or 2, **characterised in that** the polyolefin layer (3) with the laser-absorbent substance is embedded between polyolefin layers (4, 5) without this substance.

4. The film according to one of claims 1 to 3, **characterised in that** the laser-absorbent polyolefin layer (3) contains mixed silicates as the laser-absorbent substance.

5. The film according to claim 4, **characterised in that** the laser-absorbent polyolefin layer (3) contains kaolin as the laser-absorbent substance.

6. The film according to one of claims 1 to 5, **characterised in that** the laser-absorbent polyolefin layer (3) contains more than 0.1% by weight and less than 50% by weight, preferably between 0.2% and 10% per weight of the laser-absorbent substance.

7. The film according to one of claims 1 to 6, **characterised in that** the polyolefin layer (3) with the laser-absorbent substance has a thickness between 5 and 200 µm, preferably between 10 and 100 µm.

8. The film according to one of claims 1 to 7, **characterised in that** the further polyolefin layer (4) which does not contain the substance, has a thickness between 5 and 200 µm, preferably between 10 and 100 µm.

## Revendications

1. Film multicouches pour des emballages à déchirer avec au moins deux couches de polyoléfines (3, 4, 5),
au moins une couche de polyoléfines (3) contenant une substance absorbant le laser,
une ligne d'affaiblissement (1) étant ménagée dans la couche de polyoléfines (3) avec la substance absorbant le laser au moyen d'un faisceau laser CO₂ (2) et
au moins une couche de polyoléfines (4) supplémentaire ne contenant pas de substance absorbant le laser et formant une couche de scellement intacte sur la face intérieure de l'emballage,
dans lequel les couches de polyoléfines (3, 4, 5) sont constituées de polyéthylène.

2. Film selon la revendication 1, **caractérisé en ce que** la couche de polyoléfines (3) avec la substance absorbant le laser et la couche de polyoléfines (4) supplémentaire qui ne contient pas ladite substance sont disposées dans le voisinage direct l'une de l'autre.

3. Film selon la revendication 1 ou la revendication 2, **caractérisée en ce que** la couche de polyoléfines (3) avec la substance absorbant le laser est incorporée entre des couches de polyoléfines (4, 5) exemptes de ladite substance.

4. Film selon l'une quelconque des revendications 1 à 3, **caractérisé en ce que** la couche de polyoléfines (3) absorbant le laser contient des silicates mixtes en tant que substance absorbant le laser.

5. Film selon la revendication 4, **caractérisé en ce que** la couche de polyoléfines (3) absorbant le laser contient du kaolin en tant que substance absorbant le laser.

6. Film selon l'une quelconque des revendications 1 à 5, **caractérisé en ce que** la couche de polyoléfines (3) absorbant le laser contient plus de 0,1% en poids et moins de 50% en poids, de préférence entre 0,2% en poids et 10% en poids de la substance absorbant le laser.

7. Film selon l'une quelconque des revendications 1 à 6, **caractérisé en ce que** la couche de polyoléfines (3) avec la substance absorbant le laser présente une épaisseur comprise entre 5 et 200 µm, de préférence entre 10 et 100 µm.

8. Film selon l'une quelconque des revendications 1 à 7, **caractérisé en ce que** la couche de polyoléfines (4) supplémentaire, ne contenant pas la substance absorbant le laser présente une épaisseur comprise entre 5 et 200 µm, de préférence entre 10 et 100 µm.
